Europäisches Patentamt

European Patent Office

Office européen des brevets

(19)

(11) Numéro de publication : **0 058 096**
**B1**

(12) **FASCICULE DE BREVET EUROPÉEN**

(45) Date de publication du fascicule du brevet :
21.11.85

(21) Numéro de dépôt : 82400015.2

(22) Date de dépôt : 07.01.82

(51) Int. Cl.⁴ : **F 16 K   1/226**, F 16 K   1/228,
**F 16 J 15/32**

(54) Double joint torique flexible.

(30) Priorité : 13.01.81 FR 8100460

(43) Date de publication de la demande :
18.08.82 Bulletin 82/33

(45) Mention de la délivrance du brevet :
21.11.85 Bulletin 85/47

(84) Etats contractants désignés :
BE DE GB IT NL SE

(56) Documents cités :
CH-A-   616 496
FR-A- 1 572 497
FR-A- 2 232 235
FR-A- 2 300 944
FR-A- 2 326 637
FR-A- 2 398 940
US-A- 3 077 331
US-A- 3 077 332

(73) Titulaire : **APPLICATIONS MECANIQUES ET ROBI-
NETTERIE INDUSTRIELLE A.M.R.I. Société anonyme
dite:**
**Les Mercuriales 40, rue Jean Jaurès**
**F-93176 Bagnolet Cedex (FR)**

(72) Inventeur : **Bonafous, Maurice**
**50 Route d'Espagne**
**Gurmencon F-74400 Oloron (FR)**

(74) Mandataire : **Marquer, Francis et al**
**35, Avenue Victor Hugo Résidence Chamfleury**
**F-78180 Voisins-le-Bretonneux (FR)**

Jouve, 18, rue St-Denis, 75001 Paris, France

**Description**

La présente invention concerne un double joint torique flexible correspondant au préambule de la revendication 1, d'un type analogue à celui décrit dans le FR-A-2.398.940, déposé le 26 juillet 1977, c'est-à-dire composé de deux structures de joint torique liées par une membrane souple, à savoir, un joint assurant une étanchéité statique et l'autre une étanchéité dynamique entre l'amont et l'aval du robinet à papillon.

Ce double joint torique fait également intervenir un anneau de réaction associé à la structure de joint assurant l'étanchéité dynamique. Cet anneau de réaction est plus particulièrement destiné à reprendre les efforts de compression du siège d'étanchéité, par exemple la tranche du papillon dans le cas d'un robinet à papillon, et à assurer une répartition homogène des pressions de contact sur toute la circonférence (autocentrage du joint). Cet anneau de réaction est monté serré radialement sur la structure de joint assurant l'étanchéité dynamique et flottant pour assurer l'autocentrage de cette structure de joint sur le siège d'étanchéité (tranche du papillon).

On rappelle que, dans le mode de réalisation décrit dans le FR-A-2.398.940, la susdite membrane souple consiste en une pièce torique, de section de révolution, présentant une section sensiblement en forme de C, dont les extrémités viennent en retour sur les deux structures de joint, et dont la partie médiane qui forme l'âme présente une pliure en forme de V. Selon un tel montage, les deux structures de joint se trouvent donc situées d'un même côté de l'âme de la membrane et sensiblement tangentes par rapport à celle-ci.

Le double joint précédemment défini permet d'obtenir d'excellents résultats, notamment dans le cas d'obturateurs tels que des robinets à papillon.

Dans cette dernière application, le double joint peut être disposé dans une cavité annulaire formée entre le flanc latéral du corps du robinet et une bride fixée sur ledit flanc, au moyen de goujons de serrage, cette cavité débouchant dans la chambre intérieure du corps du robinet.

Dans le fond de la cavité, est ménagée une gorge annulaire formée par un étagement d'alésage de la bride et par le flanc latéral du corps du robinet. Cette gorge reçoit la première structure de joint torique et forme avec elle la première étanchéité statique, la pression d'étanchéité étant obtenue par serrage de ladite bride sur le corps du robinet au moyen des susdits goujons.

Sur le flanc latéral du corps du robinet est en outre prévu un évidement circulaire dans lequel vient se disposer la pliure en V de la susdite membrane.

Un tel montage nécessite donc notamment, d'une part, la réalisation d'une bride de forme relativement complexe, venant se fixer sur le corps du robinet et, d'autre part, des usinages précis sur le flanc latéral du corps du robinet.

L'invention a donc pour but la réalisation d'un double joint torique flexible, de principe identique à celui décrit dans le FR-A-2.398.940 de manière à simplifier considérablement l'exécution des pièces de fixation.

L'invention telle qu'elle est caractérisée dans la revendication 1, obtient ce but.

Des modes particuliers de réalisation de l'invention apparaissent dans les revendications 2 et 3.

Il est à noter que l'invention prévoit également la possibilité d'un montage inverse à celui précédemment décrit.

Dans un tel montage inverse le siège d'étanchéité consiste alors en une surface conoïde prévue dans l'alésage du corps du robinet et le double joint torique flexible se trouve monté au niveau de la tranche du papillon.

Selon une autre caractéristique de l'invention, le susdit ensemble de dispositions fait intervenir,

d'une part, réalisées sur le susdit flanc abrupt, deux gorges annulaires, à savoir, une gorge à parois latérales obliques destinée à recevoir la première structure de joint, et une gorge dans laquelle s'engage la nervuration de la membrane étanche, et

d'autre part, une pièce annulaire de diamètre extérieur sensiblement égal au diamètre de l'alésage du corps, et s'engageant dans celui-ci, côté flanc abrupt, cette pièce présentant d'un côté une face étagée à au moins deux niveaux, dont l'une des surfaces, en forme de couronne, est destinée à venir comprimer la première structure de joint torique, et dont l'autre surface délimite avec ledit flanc abrupt, une cavité annulaire dans laquelle se trouvent logés, flottants, l'anneau de réaction ainsi que, partiellement, la deuxième structure de joint,

des moyens étant en outre prévus pour exercer sur la pièce annulaire, un effort axial en direction dudit flanc abrupt pour écraser la première structure de joint de manière à obtenir la susdite étanchéité statique.

Des modes de réalisation de l'invention seront décrits ci-après, à titre d'exemples non limitatifs, avec référence aux dessins annexés dans lesquels :

la figure 1 représente, en coupe transversale un double joint torique flexible, avec anneau de réaction,

la figure 2 est une perspective schématique avec écorchés partiels du double joint représenté figure 1,

la figure 3 représente, en coupe axiale, un robinet à papillon équipée d'un double joint torique, situé dans le corps du robinet,

la figure 4 est une vue à plus grande échelle du détail A de la figure 3.

Comme précédemment mentionné, le double joint 1 selon l'invention comprend deux structures de joint 2, 3 comportant chacune un ressort hélicoïdal 4, 5 au moins en partie recouvert d'une enveloppe primaire 6, 7 à section sensiblement circulaire, la structure de joint 2 étant destinée à assurer l'étanchéité statique et la structure de joint 3 servant à assurer l'étanchéité dynamique.

Ces deux structures de joint 2, 3 sont reliées l'une à l'autre par une membrane d'étanchéité 8 consistant en une pièce torique de section sensiblement en forme de S dont les extrémités 9, 10 viennent envelopper au moins en partie les deux structures de joint 2, 3 pour en former les enveloppes d'étanchéité, et dont la partie intermédiaire 11 présente une nervuration semi-circulaire 12, jouant le rôle d'élément élastique assurant la souplesse de l'autocentrage de la structure de joint 3.

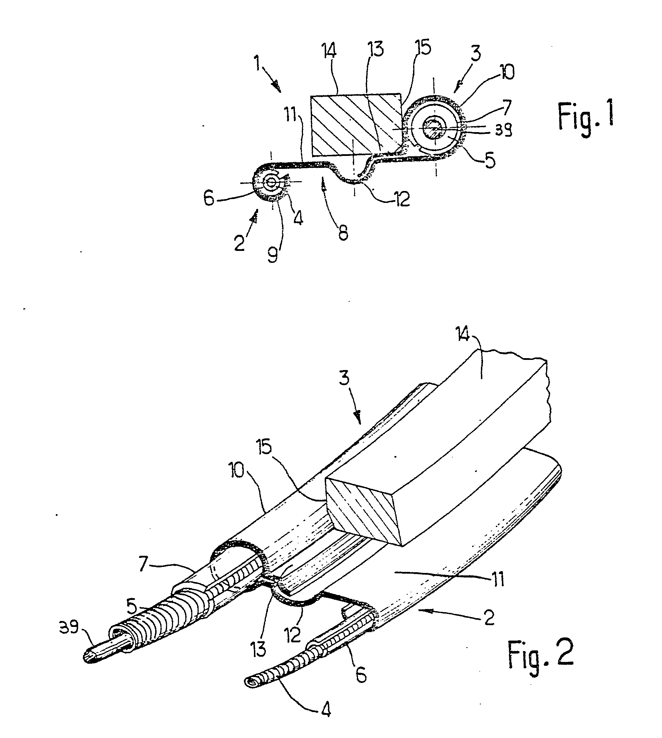

Dans l'exemple représenté figures 1 et 2, la membrane d'étanchéité 8 enveloppe la structure de joint 3 puis vient doubler (portion 13) la partie médiane 11.

L'anneau de réaction 14, de section sensiblement rectangulaire, vient porter par sa face cylindrique interne 15 contre la structure de joint 3.

Ainsi, la structure de joint 3 se trouve retenue du côté opposé à celui où elle vient en contact de la portée d'étanchéité qui lui est associée, par l'anneau de réaction 14, l'ensemble formé par la structure de joint 3 et l'anneau de réaction 14 pouvant se déplacer en bloc pour s'autocentrer sur la portée d'étanchéité.

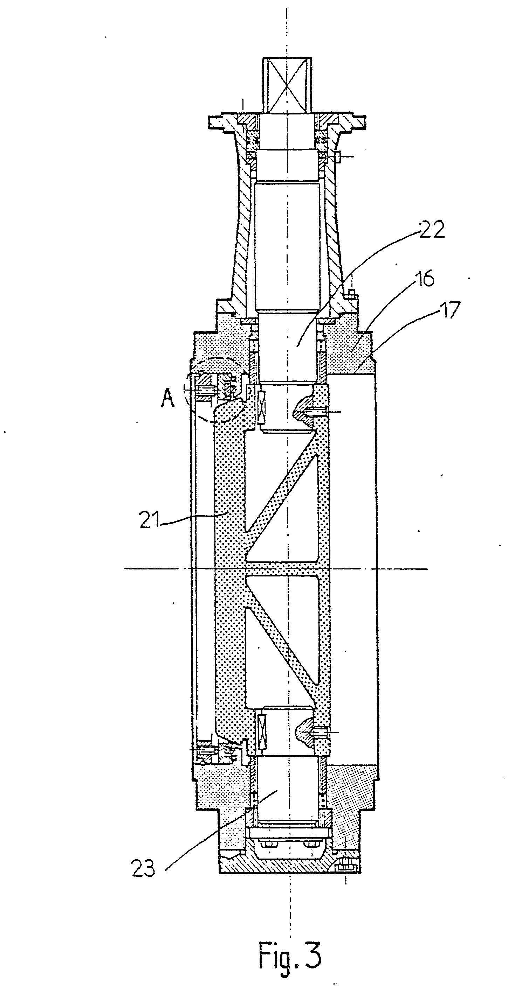

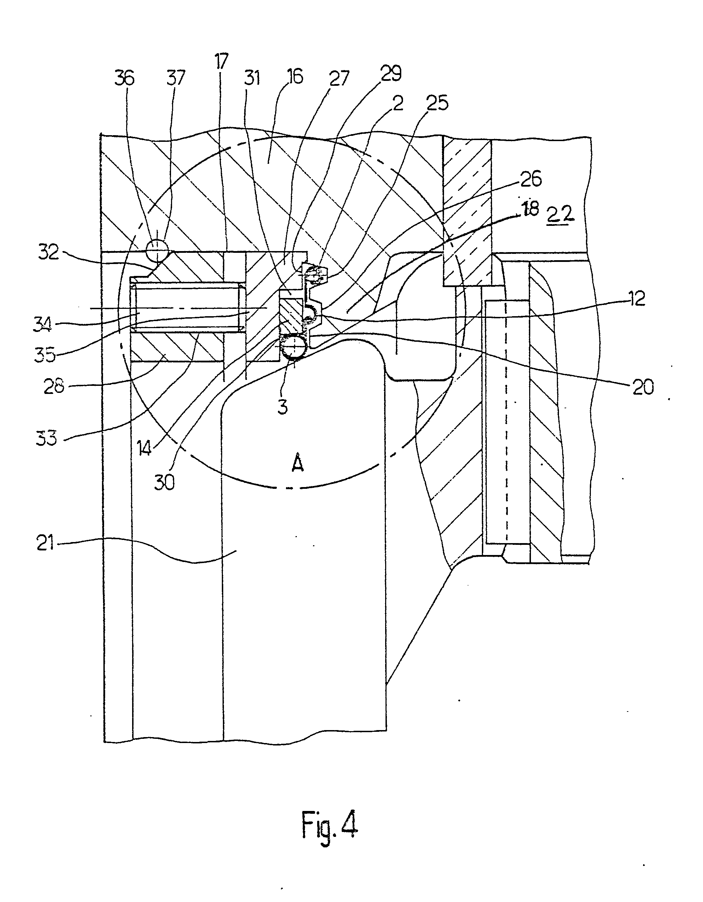

Avec référence aux figures 3 et 4, le robinet à papillon dans lequel se trouve monté le double joint précédemment décrit comprend :

d'une part, un corps 16 à alésage central 17 muni d'un épaulement d'alésage 18 qui présente un flanc abrupt 20 situé dans un plan perpendiculaire à l'axe de l'alésage 17, et

d'autre part, un papillon 21 monté pivotant dans ledit corps 16 (axes 22, 23) qui est destiné à venir porter, en fin de course d'obturation, sur la structure de joint dynamique 3, au terme d'un déplacement tangent ou parallèle à l'axe principal du siège.

Sur le flanc abrupt 20 de l'épaulement d'alésage 18 sont ménagées deux gorges circulaires coaxiales, à savoir, une gorge 25 à parois latérales obliques section conique destinée à recevoir la structure de joint 2, et une gorge 26 dans laquelle vient s'engager la nervuration 12 de la membrane étanche 8.

Ces deux gorges circulaires coaxiales 25, 26 ont des fonctions différentes :

la gorge 25, de section conique, qui est destinée à recevoir le joint statique, doit être réalisée avec précision ;

la gorge 26 qui sert de dégagement pour loger la souplesse de la membrane 8, ne nécessite pas de précision d'usinage (jeu important pour permettre le débattement de la souplesse).

Dans l'alésage 17 du corps 16, côté flanc abrupt 20, viennent successivement s'engager une pièce annulaire 27 de maintien du double-joint 1, ainsi qu'une rondelle de fixation et de serrage 28, ces deux pièces présentant un diamètre extérieur sensiblement égal au diamètre dudit alésage 17.

La pièce annulaire 27 présente une section sensiblement en forme de L, c'est-à-dire comprenant du côté dudit flanc abrupt 20 une face frontale étagée à deux niveaux dont l'une des deux surfaces 29, en forme de couronne, est destiné à venir comprimer la structure de joint 2 et dont l'autre surface 30, délimite avec le flanc abrupt 20 une cavité annulaire 31 dans laquelle se trouvent logés l'anneau de réaction 14 ainsi que la structure de joint 3 qui dépasse légèrement à l'extérieur de ladite cavité 31.

La rondelle de fixation et de serrage 28 présente une section sensiblement rectangulaire dont l'une des régions angulaires 32 adjacente à l'alésage 17 du corps 16 et située du côté opposé au flanc abrupt 20 est chanfreinée. Cette rondelle de fixation 28 est munie d'une série de perçages taraudés 33 parallèles à son axe et uniformément répartis. Dans ces perçages 33 viennent de visser des vis sans tête 34 dont les extrémités plates viennent porter sur la face frontale 35 de la pièce annulaire 27, du côté opposé à la face étagée 29, 30. La rondelle de fixation 28 se trouve axialement retenue au niveau du chanfrein 32 au moyen d'un jonc 36 s'engageant dans une rainure 37 ménagée dans l'alésage 17 du corps 16.

Le serrage de la pièce annulaire 27 contre le flanc abrupt 20 du siège s'obtient donc par vissage des vis 34. Bien entendu ce serrage provoque la compression de la structure de joint 2 dans son logement (gorge 25). Il est à noter que l'effort de serrage de la structure de joint statique 2 est diminué en raison de la forme conique de la gorge 25 ménagée dans le corps 1, et que cette disposition présente également l'avantage d'obtenir une double étanchéité (une étanchéité par face oblique).

Il convient de noter, qu'en plus des avantages précédemment mentionnés, la conformation particulière du double joint 1 permet d'éviter que la partie de la membrane 8, enveloppant la structure de joint 3, ne puisse s'ouvrir.

En effet, l'anneau de réaction 14 interdit tout glissement de la partie 13 de la membrane 8 venant en retour sur la partie intermédiaire 11.

Le double joint précédemment décrit permet d'obtenir d'excellents résultats pour les hautes et basses températures de service. Dans ce cas, comme d'ailleurs pour de nombreuses autres applications, il peut être réalisé entièrement métallique. Ainsi, à titre d'exemple, les ressorts hélicoïdaux 4, 5 peuvent être réalisés en inconel, les enveloppes primaires 6, 7 et la membrane d'étanchéité en cuivre. En outre, la structure de joint dynamique 3 peut comprendre un anneau limiteur d'écrasement 39, disposé à l'intérieur du ressort hélicoïdal 5, cet anneau pouvant être réalisé en acier inoxydable.

**Revendications**

1. Double joint torique flexible réalisable partiellement ou en totalité en métal et pouvant être monté sur le corps ou sur l'obturateur d'un robinet à papillon, ce double joint comprenant une première (2) et une seconde structures de joint torique (3), respectivement destinées à assurer une étanchéité statique et une étanchéité dynamique, un anneau de réaction (14) destiné à reprendre les efforts de compression du siège d'étanchéité et à assurer une répartition homogène des pressions de contact sur toute la circonférence, cet anneau de réaction (14) étant monté serré radialement sur la seconde structure de joint (3) et flottant pour assurer l'autocentrage de cette seconde structure de joint sur le siège d'étanchéité, ledit double joint comprenant en plus une membrane étanche (8) présentant une partie médiane qui forme son âme (11) et qui comprend une nervuration (12) qui constitue au moins en partie l'élément déformable élastiquement de la membrane (8), les extrémités (9, 10) de la membrane (8) viennent envelopper au moins en partie les deux structures de joint (2, 3) pour en former des enveloppes d'étanchéité, ledit double joint torique étant caractérisé en ce que les deux structures de joint (2, 3) sont situées sur les côtés latéraux opposés de la partie médiane qui forme l'âme (11) de la membrane (8) reliant les deux structures de joint (2, 3) de sorte que la membrane (8) présente une section sensiblement en forme de S.

2. Double joint torique flexible selon la revendication 1, caractérisé en ce que la membrane (8) enveloppe la structure de joint (3) destinée à assurer l'étanchéité dynamique puis vient doubler, au moins partiellement, la partie médiane de ladite membrane (8), et en ce que le susdit anneau de réaction (14) est disposé de manière à interdire tout glissement de la partie (13) de la membrane venant en retour sur la partie médiane.

3. Ensemble de dispositions permettant un montage simplifié d'un double joint torique flexible selon l'une des revendications précédentes dans un robinet tel qu'un robinet à papillon, comprenant, d'une part, un corps (16) dans lequel est réalisé un alésage central (17) à un ou plusieurs niveaux muni d'un épaulement d'alésage (18) qui présente d'un côté un flanc abrupt (20) de préférence situé dans un plan perpendiculaire à l'axe dudit alésage (17), ce flanc abrupt comportant une gorge (26) destinée à recevoir la nervuration (12) de la membre étanche (8), et, d'autre part, un organe d'obturation tel que, par exemple un papillon (21), monté pivotant dans ledit corps et destiné à venir porter, en fin de course d'obturation, sur la structure de joint (3), au terme d'un déplacement tangent ou parallèle à l'axe principal à l'axe principal dudit siège, ledit robinet comprenant en outre :

une pièce annulaire (27) de diamètre extérieur sensiblement égal au diamètre de l'alésage (17) du corps (16), et s'engageant dans celui-ci, côté flanc abrupt (20), cette pièce étant destinée à venir comprimer la première structure de joint torique (2), et à délimiter avec ledit flanc abrupt (20), une cavité annulaire (31) dans laquelle se trouvent logés l'anneau de réaction (14) ainsi que, partiellement, la deuxième structure de joint (3), et

des moyens pour exercer sur ladite pièce annulaire, un effort axial en direction dudit flanc abrupt (20) et pour la bloquer en position dans l'alésage (17) du corps (16), caractérisé en ce que ledit flanc abrupt (20) comprend également une gorge annulaire à parois latérales coniques (25), destinée à recevoir la première structure de joint (2) en vue de réaliser une double étanchéité statique.

**Claims**

1. A flexible double toric sealing ring partially or totally constructable of metal and adapted to be mounted on the body or closing member of a butterfly valve, this double sealing ring comprising a first (2) and second sealing ring structure (3) which ensure respectively a static seal and a dynamic sealing, a counter ring (14) which absorbs the compressive forces at the valve seat and also equally distributes the contact pressures along the whole circumference, said counter ring (14) being mounted radially tight around the second sealing ring structure (3) and movable to allow self-centering of this second sealing ring structures on the valve seat, said double sealing ring further comprising a sealing membrane (8) having a median part forming its web (11) and which comprises ribs (12) forming, at least partially, the elastically deformable element of the membrane (8), the ends (9, 10) of the membrane (8) surrounding, at least partially, the two sealing ring structures (2, 3) to form sealing envelopes, said double toric sealing ring being characterized by the placement of the two sealing ring structures (2, 3) on the opposite lateral sides of the median part forming the web (11) of the membrane (8) linking the two sealing ring structures (2, 3) together so that the membrane (8) has a S-shaped section.

2. A flexible double toric sealing ring according to claim 1, characterized in that the membrane (8) envelops the sealing ring structure (3) providing dynamic sealing and forms, at least partially, a double layer at the middle section of said membrane (8) and in that said counter ring (14) is located so as to avoid sliding of the part (13) of the membrane coming back to the middle section.

3. An arrangement allowing a simplified mounting of a double flexible toric sealing ring according to one of the preceding claims, in a valve such as a butterfly valve comprising, on the one hand, a body (16) having a central boring (17) with one or more levels having a protuberance (18) with, on one side a steep face (20) which is preferably perpendicular to the axis of the aforesaid boring (17), this steep side comprising a groove (26) for receiving the rib (12) of the sealing membrane (8) and, on tne other hand, a closure, for example butterfly member (21) pivotally mounted in said body which closes against the sealing ring structure (3) at the end of the closure movement, after a movement tangential to or parallel to the main axis of the valve seat, said valve further comprising :

an annular part (27) with an exterior diameter substantially equal to the diameter of the boring (17) of body (16), the side of said annular part associated with the steep face (20) functioning to restrain the first sealing ring structure (2) and forming with said steep face (20) an annular cavity (31) in which the counter ring (14) is mounted, along with partially the second sealing ring structure (3), and

means for exerting on said annular part an axial force in the direction of the said steep face (20) and for retaining it in position in the boring (17) of body (16), characterized in that said steep face (20) further comprises an annular groove with conical side walls (25) adapted to receive the first sealing structure (2) for ensuring double static sealing.

**Patentansprüche**

1. Flexible Doppelringdichtung, die teilweise oder ganz aus Metall hergestellt werden kann und auf den Körper oder den Verschluss eines Klappenventils montiert werden kann, wobei die se Doppelringdichtung enthält : eine erste (2) und eine zweite (3) Dichtringstruktur, die jeweils die statische und dynamische Dichtung bewirken, einen Gegenring (14), welcher die Druckkraft des Dichtungssitzes absorbiert und eine gleichmässige Verteilung des Kontaktdruckes auf den gesamten Umfang bewirkt, wobei dieser Gegenring (14) radial eng anliegend auf die zweite Dichtungsstruktur (3) montiert ist und beweglich, um eine Selbstzentrierung dieser zweiten Dichtungsstruktur auf dem Dichtungssitz zu bewirken, wobei besagte Doppeldichtung ausserdem eine wasserdichte Membran (8) enthält, deren mittlerer Teil den Kern (11) bildet und Rippen (12) besitzt, die, zumindest teilweise, das elastisch verformbare Element der Membran (8) bilden, wobei die Enden (9, 10) der Membran (8) zumindest teilweise die beiden Dichtungsstrukturen (2, 3) umgeben, um so Dichthüllen zu bilden, wobei besagte Doppelringdichtung dadurch gekennzeichnet ist, dass die beiden Dichtungsstrukturen (2, 3) sich auf den beiden entgegengesetzten Seitenflächen des Mittelteils befinden, welcher den Kern (11) der Membran (8) formt, die beide Dichtungsstrukturen (2, 3) so verbindet, dass die Membran (8) in Schnitt im wesentlichen die Form eines « S » hat.

2. Flexible Doppelringdichtung nach Anspruch 1, dadurch gekennzeichnet, dass die Membran (8) die Dichtungsstruktur (3) umgiebt, welche die dynamische Dichtung bewirkt und dann, zumindest teilweise, den mittleren Teil besagter membran (8) auf neue bedeckt und dadurch, dass besagter Gegenring (14) so angebracht ist, dass ein Rutschen des Teils (13) der Membran verhindert wird, der aufs neue den Mittelteil bedeckt.

3. Eine Reihe von Vorrichtungen, um eine flexible Doppelringdichtung nach einem der vorhergehenden Ansprüche auf einfache Weise in ein Ventil, wie zum Beispiel ein Klappenventil, einzubauen, mit einerseits, einem Körper (16), in dem eine zentrale Bohrung (17) mit einem oder mehreren Niveaus ausgeführt wurde, die mit einem Bohrungsabsatz (18) versehen ist, welcher einerseits eine steil abfallende Seite (20) hat, die sich vorzugsweise in einer Ebene senkrecht zur Achse der besagten Bohrung (17) befindet, wobei diese steil abfallende Seite eine Rille (26) hat, die die Rippe (12) der wasserdichten Membran (8) aufnimmt, und, andererseits, ein Verschlussorgan, wie zum Beispiel eine Klappe (21), die schwenkbar in besagten Körper eingebaut ist und am Ende der Verschlussbewegung auf der Dichtungsstruktur (3) aufliegt, nach einer Bewegung tangierend oder parallel zur Hauptachse besagten Sitzes, wobei besagtes Ventil ausserdem enthält :

ein ringförmiges Teil (27) mit einem äusseren Durchmesser, der etwa gleich dem Durchmesser der Bohrung (17) des Körpers (16) ist und in diese auf der steilabfallenden Seite (20) eingeführt wird, wobei dieses Teil die erste Ringdichtungsstruktur (2) zusammenpresst und mit besagter steilen Seite (20) eine ringförmige Vertiefung (31) bildet, in der sich der Gegenring (14), sowie, teilweise, die zweite Dichtungsstruktur (3) befinden, und

Mittel, um auf besagtes ringförmiges Teil eine axiale Kraft in Richtung auf besagte steile Seite (20) auszuüben und es in der Bohrung (17) des Körpers (16) in Stellung zu halten, dadurch gekennzeichnet, dass besagte steile Seite (20) ebenfalls eine ringförmige Vertiefung mit konisch zulaufenden Seitenwänden (25) hat, welche eine erste Dichtungsstruktur (2) aufnimmt, um so eine doppelte statische Dichtung zu erreichen.

Fig. 1

Fig. 2

Fig. 3

Fig. 4